# EUROPEAN PATENT SPECIFICATION

(11) **EP 4 469 697 B1**
(45) Date of publication and mention of the grant of the patent: **29.10.2025**
(21) Application number: 22790473.7
(22) Date of filing: 16.09.2022
(51) Int. Cl.: F16F 9/18, F16F 9/06

(54) **VOLUME COMPENSATING DAMPING APPARATUS**
VOLUMENKOMPENSIERENDE DÄMPFUNGSVORRICHTUNG
APPAREIL D'AMORTISSEMENT À COMPENSATION DE VOLUME

(30) Priority: 28.01.2022 US 202263304081 P
(43) Date of publication of application: 04.12.2024
(73) Proprietor: STABILUS GmbH, 56070 Koblenz (DE)
(72) Inventor: KULL, James T., Denver, North Carolina 28037 (US); HARTMAN, Patrick, Belmont, North Carolina 28012 (US); LÖHKEN, Lars, 53545 Linz (DE); MÜLLER, Markus, 56072 Koblenz (DE)
(74) Representative: Höer, Daniela
(86) International application number: PCT/EP2022/075807
(87) International publication number: WO 2023/143758

(56) References cited:
- DE-A1- 102018 121 694
- DE-A1- 2 730 405
- FR-A- 1 392 794
- US-A- 4 334 600
- US-A1- 2017 335 917

## Description

### TECHNICAL FIELD

The present invention relates to the mechanical arts. An embodiment of the invention comprises a volume compensating damping apparatus for use with solar panel arrays. U.S. Patent No. 10,648,528 and International Publication No. WO2020/018532A1 disclose such damping apparatus.

### BACKGROUND

Solar energy can be harvested and converted to electric energy through the use of solar panel devices comprising solar heat, photovoltaic or photoelectric panels (PV). Solar panels can be attached to a rotating structure to form an array of solar panels configured to follow the sun. Solar tracking devices can rotate an array of panels to maintain alignment with the sun over the course of a day to maximize energy collection from the sun. U.S. Patent No. 9,995,506, describes a system for solar tracking.

The solar panels can be attached to a rotating beam and rotated with a motor. The length of the beam allows it to have torsional properties. The large area created by the solar panels can catch the wind and cause a deflection in the attaching beam. The various speeds of the wind (wind buffeting) can start a harmonic motion in the structure causing detrimental loads.

A damping apparatus, such as a damping apparatus disclosed in International Publication No. WO2020/018532, can be used with a solar array to dissipate the kinetic energy of the structure by converting the kinetic energy into heat. This heat load over time deteriorates the life of the damper.

Two types of dampers - twin tube and mono tube dampers - are currently used with solar tracking devices. Twin tube dampers have two chambers - an internal tube where the pressurized dampening occurs due to a piston travelling through oil, and an external tube where the oil flows when displaced by the rod volume of a piston rod entering the tube. Twin tube dampers are heavy and expensive because the outer tube normally is taking the full damping load of the damper while the inner tube has to withstand the pressure in the working chamber leading to a considerable wall thickness of both tubes. Typical twin tube dampers for solar arrays are so heavy that they cannot be mounted by a single person leading to high installation and maintenance costs.

Mono tube dampers have a single chamber without a second chamber for receiving displaced oil. U.S. Patent No. 10,648,528, discloses a mono tube damper for damping photovoltaic panel arrays. The mono tube damper usually is better at dissipating heat generated by the dampening action; however, the mono tube damper must be longer than the twin tube damper in order to compensate for the volume required for the displaced oil. This additional length is undesirable as it can prevent drop-in replacement of the damper and cause issues due to height restrictions of solar array since the pillars supporting the solar array must be longer possibly leading to static problems.

Typically, mono tube dampers must be mounted with their piston rod facing downwards to allow for a proper separation of the damping oil and a compensation gas by gravity. This way, the piston rod and a seal package sealing the piston rod to the pressure tube are close to the ground and more exposed to dirt, to splashing water during rainfall and to stones projected by lawn mowers circulating below the solar array.

A generic damping apparatus is known from DE2730405A1. The rod of this damping apparatus comprises an inner volume containing a compensation fluid to avoid the accumulation of compensation fluid in the upper chamber, wherein the inner volume is connected to the lower chamber.

### TECHNICAL PROBLEM

An object of the present invention is to provide a cheap, lightweight, and small damping apparatus for use with a solar panel array, the damping apparatus having a high heat dissipation and providing an alternative robust solution to avoid the accumulation of compensation fluid in the upper chamber.

### TECHNICAL SOLUTION

The technical problem is solved by a damping apparatus according to claim 1 and by a solar panel array according to claim 11 Advantageous embodiments are subject of the dependent claims.

The damping apparatus comprises a hollow housing containing a damping fluid, wherein the housing comprises an opening. The hollow housing is preferably a pressure tube and/or cylindrical. The opening is preferably circular and/or in a base of the cylindrical housing. The damping fluid is preferably a damping liquid, in particular a damping oil, most preferably a biodegradable damping oil. The housing is preferably filled completely with the damping fluid.

The damping apparatus comprises a rod partially inserted through the opening into the hollow housing, wherein the rod is guided slidably along a stroke axis relative to the hollow housing. The rod is preferably cylindrical. The cylindrical rod and/or the cylindrical housing are preferably coaxial to the stroke axis.

The damping apparatus preferably comprises a seal package being positioned within the housing proximate the opening. The seal package preferably comprises a seal for sealing the housing to the rod, a guide for guiding the rod along the stroke axis and/or a spacer for spacing the rod from the housing.

The damping apparatus comprises a piston package fixed to an end of the rod residing within the hollow housing, wherein the piston package separates an upper chamber of the hollow housing from a lower chamber of the hollow housing, wherein the upper chamber is located adjacent to the opening and outside the rod. In the context of the invention, "separates" means that the piston package substantially increases the flow resistance of the damping fluid from the upper chamber to the lower chamber and from the lower chamber to the upper chamber. When the rod is moved relative to the housing along the stroke axis, the piston package also moves along the stroke axis inside the housing forcing the damping fluid from the upper chamber to the lower chamber or vice versa. Due to the flow resistance of the damping fluid, the damping apparatus dampens the movement of the rod.

During operation, the stroke axis of the damping apparatus preferably is oriented substantially vertically, and the upper chamber is arranged substantially above the lower chamber.

The piston package preferably is cylindrical and more preferably coaxial to the stroke axis.

The piston package preferably comprises an orifice allowing the damping fluid to flow through the orifice from the upper chamber into the lower chamber and from the lower chamber into the upper chamber. The orifice defines a well-defined flow resistance of the damping fluid and consequently a well-defined damping force of the damping apparatus.

The piston package preferably is a drilled orifice type or a stacked washer type of piston package.

The rod comprises an inner volume containing a compensation fluid. The rod preferably is hollow. The compensation fluid preferably is a gas, in particular air. In a state of the rod being maximally extended out of the housing, the inner volume preferably is completely filled with the compensation fluid.

The inner volume of the rod is connected to the lower chamber of the housing in a manner conducting the damping fluid. The inner volume preferably is connected to the lower chamber at the end of the rod residing in the housing, in particular at a base of the rod residing in the housing.

When the rod is pushed into the housing, the pressure of the damping fluid in the lower chamber is increased by the movement of the piston package within the housing and by the insertion of the rod into the housing. Due to the increased pressure, the damping fluid displaced by the rod can flow into the inner volume of the rod compressing the compensation fluid. When the rod is pulled out of the housing, the pressure of the damping fluid in the lower chamber is decreased by the movement of the piston package within the housing and by the extraction of the rod from the housing. Due to the decreased pressure of the damping fluid, the pressure of the compensation fluid pushes the damping fluid from the inner volume into the lower chamber filling the volume liberated by the rod. Consequently, the inner volume of the rod acts as a compensation chamber compensating the volume of the rod inserted into the housing or extracted from the housing.

Therefore, the damping apparatus does not need an additional compensation chamber arranged radially around the housing as in previously known twin tube dampers or at a base of the housing as in previously known mono tube dampers. In addition, the weight of the damping apparatus is reduced by using a hollow rod compared to a solid rod used in conventional damping apparatus. Consequently, heat dissipation from the damping fluid in the housing is enhanced, and the damping apparatus is particularly small, lightweight, and cheap.

According to the invention, the rod comprises a semi permeable bypass allowing the compensation fluid to pass through the bypass from the upper chamber into the inner volume of the rod with a substantially smaller flow resistance than the damping fluid. The bypass preferably allows only the compensation fluid but not the damping fluid to pass.

When the rod is pulled out of the housing of the damping apparatus, compensation fluid may be pushed from the inner volume of the rod into the lower chamber of the housing. If the compensation fluid is a gas, and the damping fluid is a liquid, the compensation fluid will move from the lower chamber to the upper chamber of the housing and accumulate in the upper chamber. Since part of the - usually incompressible - damping fluid in the housing is replaced by - usually compressible - compensation fluid, the viscosity of the damping fluid and the damping force of the damping apparatus decrease leading eventually to a failure of the damping apparatus. Furthermore, the compressible compensation fluid in the upper chamber may lead to an undesired elastic recoil force counteracting movements of the rod relative to the hollow housing.

The bypass allows the compensation fluid to flow from the upper chamber into the inner volume of the rod, preferably driven by an increased pressure in the upper chamber in front of the piston package when the rod is pulled out of the hollow housing. Consequently, an accumulation of compensation fluid in the upper chamber and a resulting failure of the damping apparatus are avoided. The compensation fluid can flow from the upper chamber to the inner volume as lang as the bypass is in contact with the compensation fluid in the upper chamber.

### PREFERRED EMBODIMENTS

The rod preferably comprises a check valve restricting a flow of the damping fluid from the lower chamber into the inner volume of the rod and allowing a free flow of the damping fluid from the inner volume of the rod into the lower chamber. On the one hand, the check valve ensures that the damping fluid principally flows from the lower chamber to the upper chamber when the rod is pushed into the housing, thereby creating a sufficient damping force of the damping apparatus. On the other hand, the check valve does not hinder the replenishment of the housing with the damping fluid from the inner volume of the rod when the rod is pulled out of the housing.

Additionally, the check valve limits the pressure of the damping fluid in the inner volume. Consequently, it is possible to open the inner volume during operation of the damping apparatus without damping fluid squirting out to control the amount of damping fluid in the damping apparatus and add damping fluid if necessary.

For a proper functioning of the damping apparatus, it is important that the check valve restricts but does not completely block a flow of the damping fluid from the lower chamber into the inner volume of the rod. Otherwise, it would not be possible to push the rod into the hollow housing, because the damping fluid would not be able to liberate the necessary space for the rod by flowing into the inner volume of the rod.

The check valve preferably comprises an overpressure valve allowing a free flow of the damping fluid from the lower chamber into the inner volume of the rod if a pressure of the damping fluid in the lower chamber exceeds a predefined threshold pressure. The overpressure valve protects the damping apparatus against damage when the rod is pushed into the hollow housing with too high force and/or too high speed.

The damping apparatus preferably comprises a bolt or a stud fixing the piston package to the rod, wherein the bolt or the stud comprises a hole connecting the inner volume to the lower chamber in a manner conducting the damping fluid. The hole in the bolt or in the stud is a particularly simple way to connect the inner volume to the lower chamber.

A flow resistance of the damping fluid flowing through the orifice from the lower chamber into the upper chamber preferably is smaller than a flow resistance of the damping fluid flowing from the lower chamber into the inner volume of the rod. This ensures that the damping fluid principally flows from the lower chamber to the upper chamber when the rod is pushed into the housing, thereby creating a sufficient damping force of the damping apparatus.

An inner volume of the hollow housing preferably is approximately twice the inner volume of rod.

The inner volume of the rod preferably is approximately equal to the solid volume of a piston rod in a conventional damper.

According to a preferred embodiment, the length of the rod along the stroke axis is from 50 cm to 100 cm, preferably from 60 cm to 80 cm, in particular 74 cm. The length of the housing along the stroke axis is preferably from 40 cm to 80 cm, more preferably from 50 cm to 70 cm, in particular 60 cm. The total length of the damping apparatus along the stroke axis when the rod is at full extension preferably is from 100 cm to 200 cm, more preferably from 120 cm to 160 cm, in particular 136 cm. The total length of the damping apparatus along the stroke axis when the rod is at full compression preferably is from 60 cm to 120 cm, more preferably from 80 cm to 100 cm, in particular 86 cm.

The damping apparatus preferably comprises an expansion chamber fixed on a section of the rod outside the hollow housing, wherein the expansion chamber is in fluid communication with the inner volume of the rod. The expansion chamber preferably has a larger diameter perpendicular to the stroke axis than the rod. The expansion chamber is preferably ring cylindrical and more preferably coaxial to the stroke axis.

Due to the expansion chamber, a shorter rod may be used to accommodate the volume of damping fluid being displaced by the rod from the housing when the rod is pushed into the housing. Therefore, a smaller overall length of the damping apparatus is achieved.

The expansion chamber preferably is delimited at least in sections by an elastic expansion chamber wall, e.g. made of an elastomer, in particular made of a rubber. The elastic expansion chamber wall preferably allows a volume of the expansion chamber to increase by the volume of damping fluid entering the inner volume of the rod when the rod is pushed into the hollow housing. Due to the elastic expansion chamber wall, a pressure increase of the compensating fluid in the inner volume of the rod may be limited or completely avoided when the rod is pushed into the hollow housing. Consequently, the damping apparatus does not show an undesired elastic recoil behavior forcing the rod into a position extended from the hollow housing. Furthermore, the rod has to withstand a less important pressure of the compensation fluid in the inner volume.

If the bypass is arranged adjacent to the end of the rod residing within the hollow housing, and the compensation fluid accumulates adjacent to the opening of the hollow housing, e.g. by gravity, the bypass is in contact with the compensation fluid in the upper chamber when the rod is fully extended or close to fully extended from the hollow housing. For example, the compensation fluid can flow from the upper chamber to the inner volume when the rod is pulled out of the hollow housing from a position close to fully extended from the hollow housing.

The damping apparatus, in particular a seal package positioned within the interior of the hollow housing proximate the opening for sealing and guiding the rod, preferably is designed to minimize an amount of compensation fluid in the upper chamber. This way, the disadvantages of compensation fluid in the upper chamber are minimized. Therefore, the bypass preferably contacts an upmost region of the upper chamber when the rod is fully extended or close to fully extended from the hollow housing. Consequently, the compensation fluid may flow from the upmost region through the bypass into the inner volume of the rod.

If the bypass was equally permeable for the damping fluid as for the compensation fluid, the damping fluid would flow from the upper chamber into the inner volume of the rod when the rod is pulled out of the housing thereby reducing the pressure of the damping fluid in the upper chamber. The reduced pressure of the damping fluid would lead to a reduced damping force of the damping apparatus leading eventually to a failure of the damping apparatus. This behavior is avoided by a semipermeable bypass being permeable only for the compensation fluid.

The semi permeable bypass may comprise a very small opening connecting the inner volume of the rod to the upper chamber of the housing. Since the damping fluid usually comprises much larger molecules than the compensation fluid, the size of the opening can be chosen to selectively let the compensation fluid pass at a lower flow resistance than the damping fluid.

The semi permeable bypass preferably comprises a semi permeable membrane allowing the compensation to pass through the semi permeable membrane with a substantially smaller flow resistance than the damping fluid. A semipermeable membrane allows for a reliable discrimination of the damping fluid from the compensation fluid.

The semi permeable bypass preferably comprises a sintered metal allowing the compensation fluid to pass through the pores of the sintered metal with a substantially smaller flow resistance than the damping fluid. A sintered metal has the advantages of being mechanically and chemically stable.

The semipermeable bypass preferably comprises a threaded passage between the rod and a bolt, a stud or a nut fixed to the rod by a thread, the threaded passage allowing the compensation fluid to pass through the threaded passage with a substantially smaller flow resistance than the damping fluid. Using a threaded passage as semipermeable bypass leads to a particularly simple design of the damping apparatus since no additional parts are needed to create the bypass.

The semi permeable bypass preferably is arranged adjacent to the end of the rod residing within the hollow housing. Due to this arrangement, the bypass can be in contact with the upper chamber irrespective of a position of the rod relative to the housing of the damping apparatus allowing for an effective removal of the compensation fluid from the upper chamber.

The rod preferably comprises a fluid duct arranged in the inner volume of the rod for guiding the compensation fluid passing through the bypass from the upper chamber into the inner volume away from the end of the rod residing in the hollow housing. As explained above, the compensation fluid is pushed through the semi permeable bypass into the inner volume when the rod is pulled out of the hollow housing. At the same time, the damping fluid is sucked from the inner volume into the lower chamber. Consequently, there is a risk that the damping fluid carries the compensation along into the lower chamber decreasing the damping performance of the damping apparatus. This risk is minimized by the fluid duct guiding the compensation fluid away from the end of the rod residing in the hollow housing.

The rod preferably comprises a bushing arranged in the inner volume of the rod, the fluid duct being formed by a spacing between the bushing and a side wall of the rod. The bushing allows for a particularly simple manufacturing of the fluid duct. The bushing may be hollow cylindrically shaped, arranged concentrically to the stroke axis of the damping apparatus and/or arranged adjacent to the end of the rod residing in the hollow housing of the damping apparatus.

A solar panel array according to the invention comprises multiple solar panels and a damping apparatus according to the invention, wherein the damping apparatus is operatively connected to at least one solar panel of the solar panel array in such a way that the damping apparatus absorbs kinetic energy from movement of the at least one solar panel and converts the kinetic energy to heat energy.

Since a solar panel array is typically installed in a hot climate and requires high damping forces due to the important surface of the solar panels, a damping apparatus according to the invention offering a high heat dissipation and a small cost, size and weight at high damping force is particularly suitable for a solar panel array.

The solar panel array preferably comprises a rotating shaft operatively connected to the at least one solar panel to rotate the at least one solar panel toward the sun, wherein the damping apparatus is operatively connected to the rotating shaft. In such an arrangement, a reliable damping apparatus offering a high damping force - as the damping apparatus according to the invention - is particularly important to avoid damage to a drive of the rotating shaft due to uncontrolled motion of the at least one solar panel.

### BRIEF DESCRIPTION OF THE DRAWINGS

Figure 1 is a partially cross-sectioned perspective view of a damping apparatus according to an embodiment of the invention.
Figure 2 is another partially cross-sectioned perspective view of the damping apparatus of Fig. 1.
Figure 3 is another partially cross-sectioned perspective view of the damping apparatus of Fig. 1.
Figure 4 is another perspective view of the damping apparatus of Fig. 1.
Figure 5 is a partially cross-sectioned perspective view of a part of a damping apparatus according to another embodiment of the invention.
Figure 6 is a cross-sectioned view of a damping apparatus according to another embodiment of the invention.
Figure 7 is an enlarged view of region B in figure 6.
Figure 8 is an enlarged view of an alternative embodiment of region B in figure 6.
Figure 9 is an enlarged view of another alternative embodiment of region B in figure 6.
Figure 10 is an enlarged view of another alternative embodiment of region B in figure 6.
Figure 11 is a cross-sectioned view of a damping apparatus according to another embodiment of the invention.

### DETAILED DESCRIPTION OF THE DRAWINGS

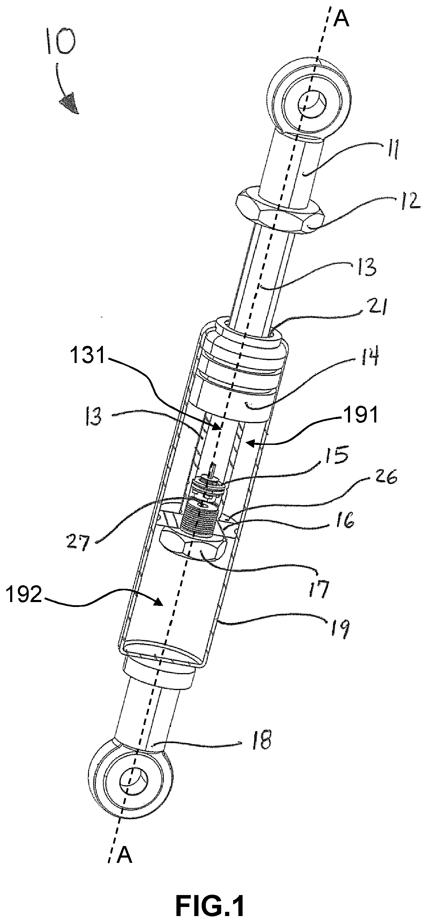

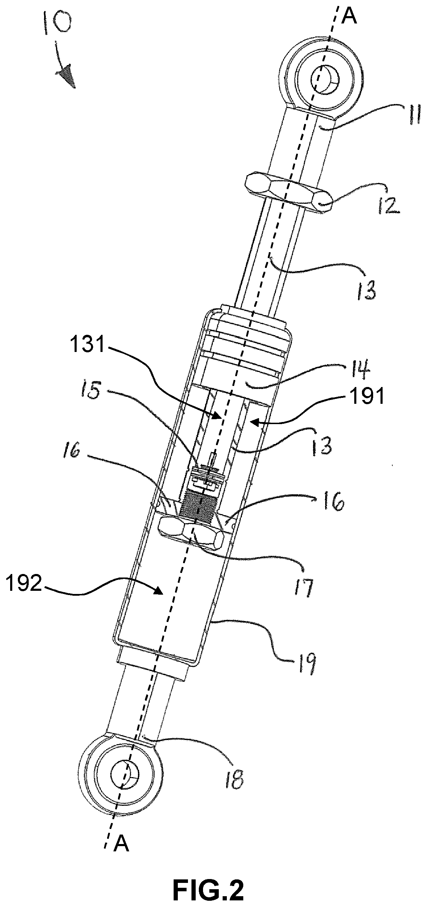

A volume compensating damping apparatus according to a preferred embodiment of the invention is illustrated in Figures 1-4 and shown generally at reference numeral 10. The damping apparatus 10 comprises a hollow piston rod 13 partially positioned within a hollow, cylindrical housing 19. As shown in Figure 1, a circular opening 21 is formed at one end of the housing 19 to allow for the piston rod 13 to be inserted therethrough. The rod 13 is guided slidably along a stroke axis A relative to the hollow housing 19. The volume of the piston rod 13 subtracted from the volume of the cylinder 19 can be approximately equal to the volume of the piston rod 13. The volume of the housing 19 can be approximately twice the volume of the rod 13.

In a preferred embodiment, the damping apparatus 10 has a total length of 2.1 m when the rod 13 is fully extended, the diameter of the housing 19 is 30.0 mm, and the diameter of the rod 13 is 21.2 mm.

The hollow rod 13 and the hollow housing 19 are preferably made of steel. Alternatively, the rod 13 and the housing 19 can be made of other suitable materials, such as metal, plastic, aluminum, ceramic and composite materials.

The damping apparatus 10 can be made using any suitable technique, including but not limited to, machining. Exemplary methods for making a damper apparatus are described in U.S. Patent No. 7,631,922, which is incorporated herein by reference.

End fittings 11, 18 are positioned at opposite ends of the damper 10. As shown in Figures 1-3, a rod side end fitting 11 is connected via a jamb nut 12 at the end of the rod 13 that is outside of the housing 19, and a housing side end fitting 18 is attached at the end of the housing 19 opposite the opening 21.

A seal package 14 is positioned within the interior of the housing 19 proximate the opening 21, as shown in Figures 1-3. The seal package 14 comprises a seal, a guide and a spacer. A damping fluid, such as a biodegradable oil, can be disposed within the housing 19, which may be designed as a pressure tube.

A cylindrical piston package 16, shown in cross section in Figures 1-3, is attached at the end of the rod 13 that resides within the housing 19. An orifice 26 is formed in the piston package 16, as shown in Figure 1, which allows damping fluid to flow through the piston package 16. The piston package 16 restricts the flow of damping fluid creating resistance and dampening forces. The piston package 16 separates an upper chamber 191 of the housing 19 adjacent to the opening 21 of the housing 19 from a lower chamber 192 of the housing 19.

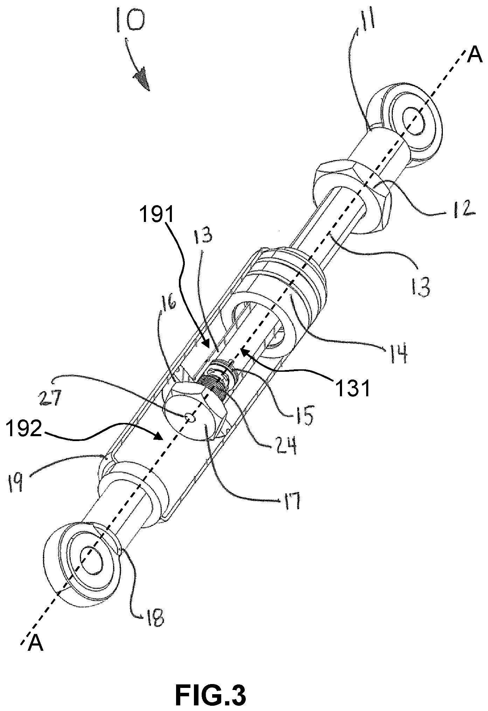

As shown in Figures 1-3, a bolt 17 is threadingly engaged at the end of the rod 13 residing in the housing 19. The bolt 17 holds the piston package 16 to the rod 13. A hole 27 is formed in the bolt 17, as shown in Figures 1 and 3. Washers 24 are positioned on the bolt 17. A check valve 15 is positioned in the interior of the rod 13 proximate the bolt 17, as shown in Figures 1-3. The check valve 15 restricts the flow of damping fluid during one direction of motion of the rod 13 and allows for the free flow of damping fluid in the other direction. The hole 27 provides an opening for damping fluid to flow from the lower chamber 192 through the check valve 15 and into the inner volume 131 of the rod 13.

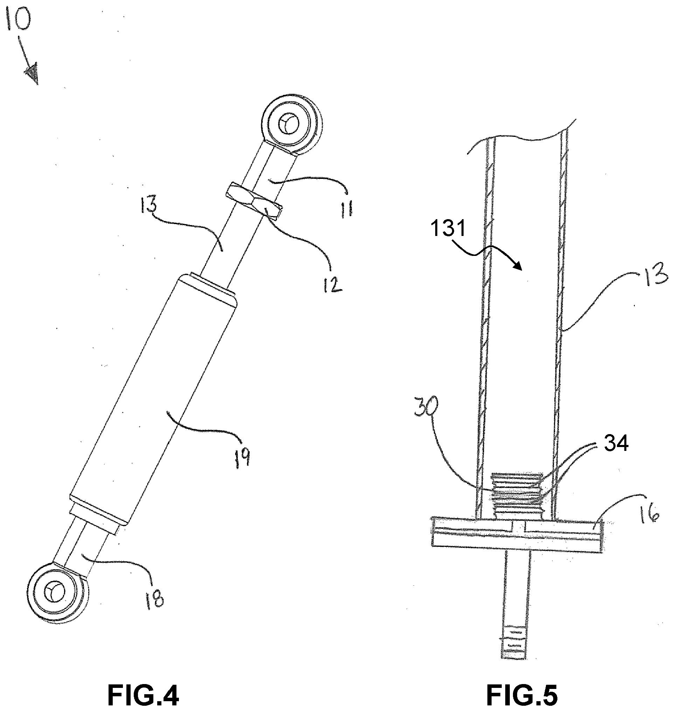

Alternatively, the piston package 16 can be attached to the rod 13 by a stud 30, as shown in Figure 5. The stud 30 can have threads on the outer surface that engage complementary threads formed on an interior surface of the rod 13. Washers 34 and the piston package 16 are placed on the stud 30 and can be held on by a nut. The check valve 15 can be held in place by a threaded washer. The stud 30 can be torqued for holding strength independent of the stacked washer piston package 16, which provides improved repeatability in production.

When the rod 13 is at full extension out of the housing 19, the damping fluid level in the housing 19 is just above the check valve 15 in the rod 13. When the rod 13 is pressed into the housing 19, the damping fluid is displaced from the lower chamber 192 of the housing 19 into the inner volume 131 of the rod 13 entering the housing 19. The check valve 15 has a flow resistance for the damping fluid greater than the piston package 16 has when the rod 13 is pressed into the housing 19. In this manner, the piston package 16 defines the damping force of the damping apparatus 10. Once the damping fluid is past the bottom valve 15 it is at low pressure. When the rod 13 is extended from the housing 19, a small underpressure is created in the lower chamber 192 that pulls damping fluid out from the inner volume 131 of the rod 13. The check valve 15 provides little resistance to the damping fluid in this direction as the higher pressure is in the upper chamber 191 between the piston package 16 and the seal package 14.

The volume of the housing 19 can be approximately twice the volume of the inner volume 131 of the hollow rod 13. The check valve 15 located in the interior of the rod 13 creates a restriction of the flow of damping fluid int the inner volume 131 to allow the piston package 16 to encounter enough pressure to create the proper dampening force required. The check valve 15 also has low resistance to the outflow of damping fluid from the inner volume 131 when the rod 13 is in an extension stroke to replenish the volume of damping fluid in the housing 19 being liberated by the exiting rod 13.

The single cylinder design of the damping apparatus 10 results in excellent heat dissipation as the rod 13 with hot damping fluid is positioned in direct contact with cool air outside of the damping apparatus 10 when the rod 13 is extended. As such, the single cylinder damping apparatus 10 generally has greater heat dissipation than twin tube dampers.

Since the inner volume 131 of the rod 13 is at low pressure, the end fitting 18 can be removed allowing a dipstick method of checking the location and thereby the volume of damping fluid located in the damping apparatus 10. This method would be able to check the available life of the damping apparatus 10.

Since inner volume 131 of the rod 13 is at low pressure, the end fitting can be removed allowing additional damping fluid (replenishment) being added to fill the damping apparatus 10.

According to a preferred embodiment, the rod 13 has an outer diameter of forty-five millimeters and an inner diameter of forty millimeters, and the housing 19 has an outer diameter of sixty-five millimeters and an inner diameter of sixty millimeters. The hollow rod 13 entering the cylinder 19 has a solid (steel) area of 333.8mm².

An embodiment of the invention comprises a method of using the damping apparatus 10 with a solar panel array. The damping apparatus 10 can be mounted to the solar panel array via a torque arm. The torque arm can be attached to the rod side end fitting 11. Rotational movement of the tube that the panels are mounted to extends or compresses the damping apparatus 10. Under slow rotation, when the solar panel array is being positioned by a motor drive, the damping apparatus 10 has little resistance. As wind creates pressure that acts on the surface area of the solar panels to induce rotation motion, the extension/compression of the damping apparatus 10 increases as does its damping force with the velocity due to fluid dynamics. This damping force prevents the wind from creating harmonic motion that could generate destructive forces.

The damping apparatus 10 is mounted to the solar panel array with the rod 13 upward, as shown in Figure 1. When the rod 13 is fully extended, the oil volume in the housing 19 is just above the check valve 15 in the rod 13. As the rod 13 is pressed into the housing 19, the damping fluid is displaced from the lower chamber 192 of the housing 19 into the inner volume 131 of the rod 13 entering the housing 19. The check valve 15 has a flow resistance for the damping fluid greater than the piston package 16 has when the rod 13 is pressed into the housing 19. In this manner, the piston package 16 defines the damping force of the damping apparatus 10. Once the oil is past the check valve 15 it is at low pressure. When the rod 13 is extended from the housing 19, a small underpressure is created in the lower chamber 132 that pulls the damping fluid out from the inner volume 131 of the rod 13. The check valve 15 provides little resistance to the damping fluid in this direction as the higher pressure is in the upper chamber 191 between the piston package 16 and the seal package 14.

While the damping apparatus 10 is described above as being used with a solar panel array in accordance with an embodiment of the invention, the damping apparatus 10 is not so limited and can be used in other applications. For example, the damping apparatus 10 can be used with shock absorbers for automobiles. In such embodiments, the damping apparatus 10 can include a separating piston so that the rod 13 can be positioned in varying orientations.

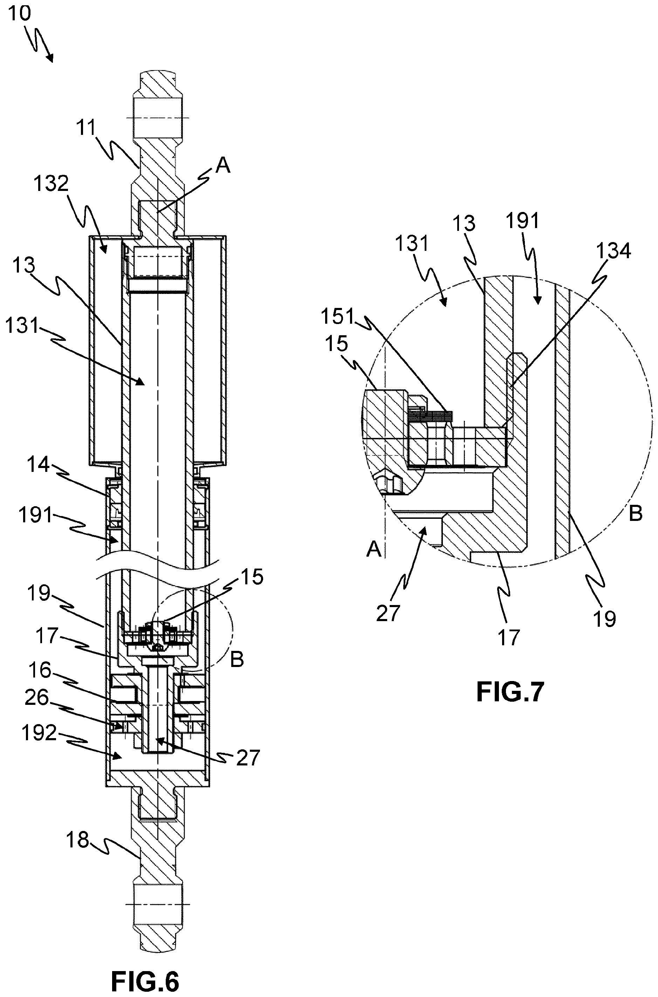

Figure 6 is a cross-sectioned view of a damping apparatus 10 according to another embodiment of the invention. Like features are labelled with the same reference signs as in figures 1 to 4 and will not be explained again. The embodiment shown in figure 6 differs from the embodiment shown in figures 1 to 4 mainly by the fact that the damping apparatus 10 includes an expansion chamber 132 in fluid communication with the inner volume 131 of the rod. The expansion chamber 132 is arranged on the rod 13 proximate the end fitting 11 to provide additional capacity for receiving damping fluid. If a shorter compressed length of the damping apparatus 10 along the stroke axis A (less rod 13 protruding from the housing 19) is desired, a larger expansion chamber 132 can be provided to increase volume available to receive damping fluid. A larger diameter expansion chamber 132 can be used to increase volume available to receive damping fluid thus reducing the compressed length of the damping apparatus 10.

Figure 7 is an enlarged view of region B in figure 6. It shows that the bolt 17 carrying the piston package 16 is fastened to the rod 13 by a thread 134. Furthermore, it can be seen that the check valve 15 separating the inner volume 131 of the rod from the hole 27 in the bolt 17 is held between the bolt 17 and the rod 13. In the embodiment shown, the check valve 15 comprises an overpressure valve 151 allowing a free flow of the damping fluid from the lower chamber 192 into the inner volume 131 of the rod 13 if a pressure of the damping fluid in the lower chamber 192 exceeds a predefined threshold pressure.

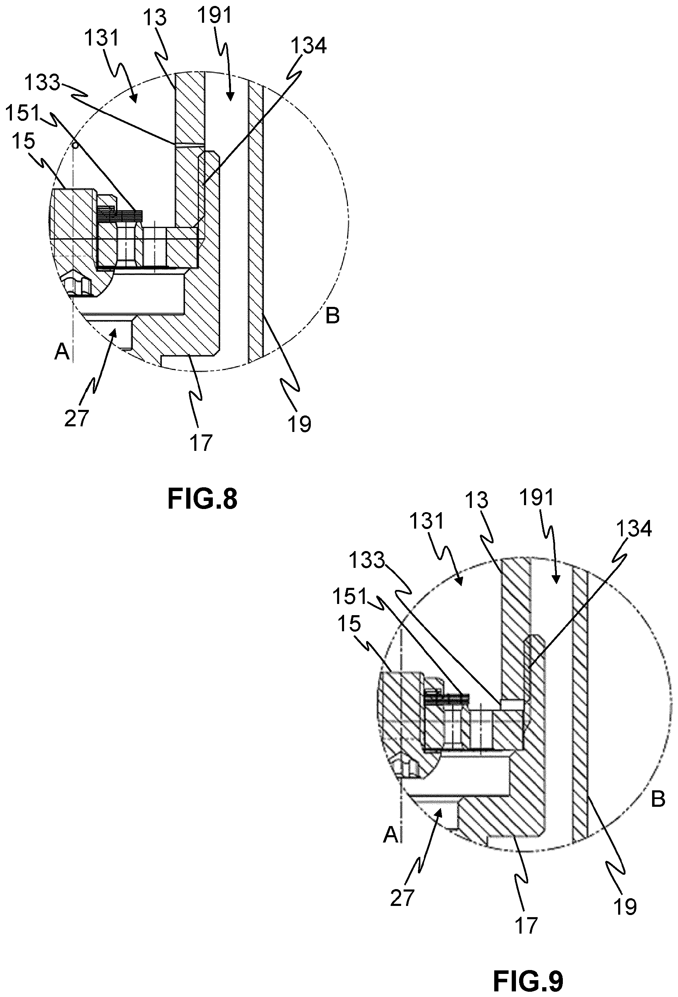

Figure 8 is an enlarged view of an alternative embodiment of region B in figure 6. In this embodiment, the rod 13 has a semi permeable bypass 133 allowing the compensation fluid to pass through the semi permeable bypass 133 from the upper chamber 191 into the inner volume 131 of the rod 13 with a substantially smaller flow resistance than the damping fluid. The semi permeable bypass 133 comprises, for example, a duct with a very small diameter. The semi permeable bypass 133 preferably is arranged adjacent to the bolt 17 and close to an end of the rod 13 residing within the hollow housing 19.

Figure 9 is an enlarged view of another alternative embodiment of region B in figure 6. In this embodiment the semi permeable bypass 133 comprises a threaded passage of the thread 134 connecting the bolt 17 to the rod 13.

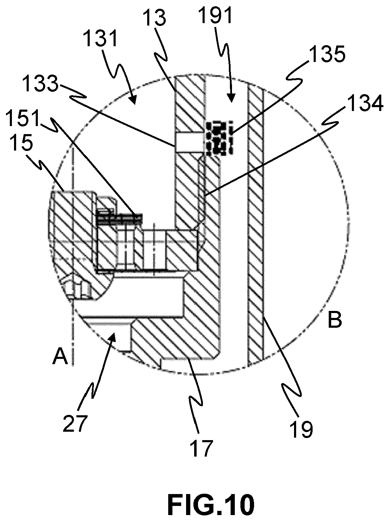

Figure 10 is an enlarged view of another alternative embodiment of region B in figure 6. In this embodiment the semi permeable bypass 133 comprises a semipermeable plug 135 allowing the compensation fluid to pass through the semi permeable bypass 133 from the upper chamber 191 into the inner volume 131 of the rod 13 with a substantially smaller flow resistance than the damping fluid. The semi permeable plug 135 comprises, for example, a semi permeable membrane or a sintered metal. For example, the semi permeable pug 135 may be ring-shaped and arranged concentrically to the stroke axis A allowing for a simple assembly of the damping apparatus 10.

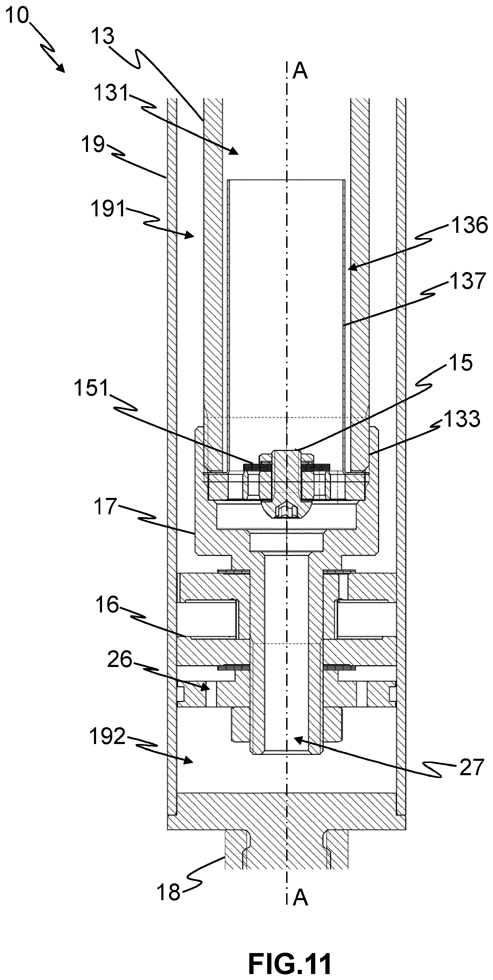

Figure 11 is a cross-sectioned view of a damping apparatus 10 according to another embodiment of the invention. Like features are labelled with the same reference signs as in figures 1 to 10 and will not be explained again. The embodiment shown in figure 11 differs from the embodiments shown in figures 1 to 10 mainly by the fact that the rod 13 comprises a fluid duct 136 arranged in the inner volume 131 of the rod 13 for guiding the compensation fluid passing through the bypass 133 from the upper chamber 191 into the inner volume 131 away from the end of the rod 13 residing in the hollow housing 19.

For example, the rod 13 comprises a bushing 137 arranged in the inner volume 131 of the rod 13, the fluid duct 136 being formed by a spacing between the bushing 137 and a side wall of the rod 13. The bushing 137 may by cylindrically shaped and arranged concentrically to the stroke axis A of the damping apparatus A and adjacent to the end of the rod 13 residing in the hollow housing 19.

Various changes can be made to the invention without departing from its scope. The above description of various embodiments of the invention is provided for the purpose of illustration only and not limitation. The scope of protection is defined by the appended claims.

**LIST OF REFERENCE SIGNS**

| | | | |
|---|---|---|---|
| A | stroke axis | 14 | seal package |
| 10 | damping apparatus | 15 | check valve |
| 11 | rod side end fitting | 151 | overpressure valve |
| 12 | jamb nut | 16 | piston package |
| 13 | rod | 17 | bolt |
| 131 | inner volume | 18 | housing side end fitting |
| 132 | expansion chamber | 19 | hollow housing |
| 133 | semipermeable bypass | 191 | upper chamber |
| 134 | thread | 192 | lower chamber |
| 135 | semipermeable plug | 21 | opening |
| 136 | fluid duct | 26 | orifice |
| 137 | bushing | 27 | hole |
| | | 30 | stud |

## Claims

1. A damping apparatus (10) comprising
a. a hollow housing (19) containing a damping fluid, wherein the housing (19) comprises an opening (21),
b. a rod (13) partially inserted through the opening (21) into the hollow housing (19), wherein the rod (13) is guided slidably along a stroke axis (A) relative to the hollow housing (19), and
c. a piston package (16) fixed to an end of the rod (13) residing within the hollow housing (19), wherein the piston package (16) separates an upper chamber (191) of the hollow housing (19) located outside the rod and adjacent to the opening (21) from a lower chamber (192) of the hollow housing (19),
d. wherein the piston package (16) comprises an orifice (26) allowing the damping fluid to flow through the orifice (26) from the upper chamber (191) into the lower chamber (192) and from the lower chamber (192) into the upper chamber (191),
e. wherein the rod (13) comprises an inner volume (131) containing a compensation fluid,
f. wherein the inner volume (131) is connected to the lower chamber (192) in a manner conducting the damping fluid,
**characterized in that**
g. the rod (13) comprises a semi permeable bypass (133) allowing the compensation fluid to pass through the bypass (133) from the upper chamber (191) into the inner volume (131) of the rod (13) with a substantially smaller flow resistance than the damping fluid, wherein the semi permeable bypass (133) comprises
i. a semi permeable membrane allowing the compensation fluid to pass through the semi permeable membrane with a substantially smaller flow resistance than the damping fluid,
ii. a sintered metal allowing the compensation fluid to pass through the pores of the sintered metal with a substantially smaller flow resistance than the damping fluid or
iii. a threaded passage between the rod (13) and a bolt (17), a stud (30) or a nut fixed to the rod (13) by a thread, the threaded passage allowing the compensation fluid to pass through the threaded passage with a substantially smaller flow resistance than the damping fluid.

2. The damping apparatus (10) according to claim 1,
**characterized in that**
the rod (13) comprises a check valve (15) restricting a flow of the damping fluid from the lower chamber (192) into the inner volume (131) of the rod (13) and allowing a free flow of the damping fluid from the inner volume (131) of the rod (13) into the lower chamber (192).

3. The damping apparatus (10) according to claim 2,
**characterized in that**
the check valve (15) comprises an overpressure valve (151) allowing a free flow of the damping fluid from the lower chamber (192) into the inner volume (131) of the rod (13) if a pressure of the damping fluid in the lower chamber (192) exceeds a predefined threshold pressure.

4. The damping apparatus (10) according to claim 1,
**characterized in that**
a. the damping apparatus (10) comprises a bolt (17) or a stud (30) fixing the piston package (16) to the rod (13),
b. wherein the bolt (17) or the stud (30) comprises a hole (27) connecting the inner volume (131) to the lower chamber (192) in a manner conducting the damping fluid.

5. The damping apparatus (10) according to claim 1,
**characterized in that**
a flow resistance of the damping fluid flowing through the orifice (26) of the piston package (16) from the lower chamber (192) into the upper chamber (191) is smaller than a flow resistance of the damping fluid flowing from the lower chamber (192) into the inner volume (131) of the rod (13).

6. The damping apparatus (10) according to claim 1,
**characterized in that**
a. the damping apparatus (10) comprises an expansion chamber (132) fixed on a section of the rod (13) outside the hollow housing (19),
b. wherein the expansion chamber (132) is in fluid communication with the inner volume (131) of the rod (13),
c. wherein the expansion chamber (132) has a larger diameter perpendicular to the stroke axis (A) than the rod (13).

7. The damping apparatus (10) according to claim 1,
**characterized in that**
a. the damping apparatus (10) comprises an expansion chamber (132) fixed on a section of the rod (13) outside the hollow housing (19),
b. wherein the expansion chamber (132) is in fluid communication with the inner volume (131) of the rod (13). and
c. wherein the expansion chamber (132) is delimited at least in sections by an elastic expansion chamber wall allowing a volume of the expansion chamber (132) to increase by the volume of damping fluid entering the inner volume (131) of the rod (13) when the rod (13) is pushed into the hollow housing (19).

8. The damping apparatus (10) according to claim 1,
**characterized in that**
the semi permeable bypass (133) is arranged adjacent to the end of the rod (13) residing within the hollow housing (19).

9. The damping apparatus (10) according to claim 1,
**characterized in that**
the rod (13) comprises a fluid duct (136) arranged in the inner volume (131) of the rod (13) for guiding the compensation fluid passing through the bypass (133) from the upper chamber (191) into the inner volume (131) away from the end of the rod (13) residing in the hollow housing (19).

10. The damping apparatus (10) according to claim 9,
**characterized in that**
the rod (13) comprises a bushing (137) arranged in the inner volume (131) of the rod (13), the fluid duct (136) being formed by a spacing between the bushing (137) and a side wall of the rod (13).

11. A solar panel array comprising multiple solar panels and a damping apparatus (10) according to one of the claims 1 to 10,
**characterized in that**
the damping apparatus (10) is operatively connected to at least one solar panel of the solar panel array in such a way that the damping apparatus (10) absorbs kinetic energy from movement of the at least one solar panel and converts the kinetic energy to heat energy.

## Patentansprüche

1. Dämpfungseinrichtung (10), umfassend
a. ein hohles Gehäuse (19), das ein Dämpfungsfluid enthält, wobei das Gehäuse (19) eine Öffnung (21) umfasst,
b. eine Stange (13), die teilweise durch die Öffnung (21) in das hohle Gehäuse (19) eingesetzt ist, wobei die Stange (13) relativ zu dem hohlen Gehäuse (19) entlang einer Hubachse (A) verschiebbar geführt ist, und
c. ein Kolbenpaket (16), das an einem Ende der Stange (13), das innerhalb des hohlen Gehäuses (19) liegt, befestigt ist, wobei das Kolbenpaket (16) eine obere Kammer (191) des hohlen Gehäuses (19), die sich außerhalb der Stange und angrenzend an die Öffnung (21) befindet, von einer unteren Kammer (192) des hohlen Gehäuses (19) trennt,
d. wobei das Kolbenpaket (16) eine Mündung (26) umfasst, die es dem Dämpfungsfluid ermöglicht, durch die Mündung (26) von der oberen Kammer (191) in die untere Kammer (192) und von der unteren Kammer (192) in die obere Kammer (191) zu strömen,
e. wobei die Stange (13) ein Innenvolumen (131), das ein Ausgleichsfluid enthält, umfasst,
f. wobei das Innenvolumen (131) mit der unteren Kammer (192) auf eine das Ausgleichsfluid leitende Art verbunden ist,
**dadurch gekennzeichnet, dass**
g. die Stange (13) einen halbdurchlässigen Bypass (133) umfasst, der es dem Ausgleichsfluid ermöglicht, mit einem wesentlich geringeren Strömungswiderstand als das Dämpfungsfluid durch den Bypass (133) von der oberen Kammer (191) in das Innenvolumen (131) der Stange (13) zu fließen, wobei der halbdurchlässige Bypass (133) umfasst
i. eine halbdurchlässige Membran, die es dem Ausgleichsfluid ermöglicht, mit einem wesentlich geringeren Strömungswiderstand als das Dämpfungsfluid durch die halbdurchlässige Membran zu fließen,
ii. ein Sintermetall, das es dem Ausgleichsfluid ermöglicht, mit einem wesentlich geringeren Strömungswiderstand als das Dämpfungsfluid durch die Poren des Sintermetalls zu fließen, oder
iii. einen Gewindedurchgang zwischen der Stange (13) und einem Bolzen (17), wobei eine Stiftschraube (30) oder eine Mutter mittels eines Gewindes an der Stange (13) befestigt ist, wobei der Gewindedurchgang es dem Ausgleichsfluid ermöglicht, mit einem wesentlich geringeren Strömungswiderstand als das Dämpfungsfluid durch den Gewindedurchgang zu fließen.

2. Dämpfungseinrichtung (10) nach Anspruch 1,
**dadurch gekennzeichnet, dass**
die Stange (13) ein Rückschlagventil (15), das eine Strömung des Dämpfungsfluids von der unteren Kammer (192) in das Innenvolumen (131) der Stange (13) beschränkt und eine freie Strömung des Dämpfungsfluids von dem Innenvolumen (131) der Stange (13) in die untere Kammer (192) ermöglicht, umfasst.

3. Dämpfungseinrichtung (10) nach Anspruch 2,
**dadurch gekennzeichnet, dass**
das Rückschlagventil (15) ein Überdruckventil (151) umfasst, das eine freie Strömung des Dämpfungsfluids von der unteren Kammer (192) in das Innenvolumen (131) der Stange (13) ermöglicht, falls ein Druck des Dämpfungsfluids in der unteren Kammer (192) einen vordefinierten Schwellendruck überschreitet.

4. Dämpfungseinrichtung (10) nach Anspruch 1,
**dadurch gekennzeichnet, dass**
a. die Dämpfungseinrichtung (10) einen Bolzen (17) oder eine Stiftschraube (30), der/die das Kolbenpaket (16) an der Stange (13) befestigt, umfasst,
b. wobei der Bolzen (17) oder die Stiftschraube (30) ein Loch (27), das das Innenvolumen (131) auf eine das Dämpfungsfluid leitenden Art mit der unteren Kammer (192) verbindet, umfasst.

5. Dämpfungseinrichtung (10) nach Anspruch 1,
**dadurch gekennzeichnet, dass**
ein Strömungswiderstand des Dämpfungsfluids, das durch die Mündung (26) des Kolbenpakets (16) von der unteren Kammer (192) in die obere Kammer (191) strömt, kleiner als ein Strömungswiderstand des Dämpfungsfluids, das von der unteren Kammer (192) in das Innenvolumen (131) der Stange (13) strömt, ist.

6. Dämpfungseinrichtung (10) nach Anspruch 1,
**dadurch gekennzeichnet, dass**
a. die Dämpfungseinrichtung (10) eine Expansionskammer (132), die an einem Abschnitt der Stange (13) außerhalb des hohlen Gehäuses (19) befestigt ist, umfasst,
b. wobei die Expansionskammer (132) in Fluidkommunikation mit dem Innenvolumen (131) der Stange (13) steht,
c. wobei die Expansionskammer (132) senkrecht zu der Hubachse (A) einen größeren Durchmesser als die Stange (13) aufweist.

7. Dämpfungseinrichtung (10) nach Anspruch 1,
**dadurch gekennzeichnet, dass**
a. die Dämpfungseinrichtung (10) eine Expansionskammer (132), die an einem Abschnitt der Stange (13) außerhalb des hohlen Gehäuses (19) befestigt ist, umfasst,
b. wobei die Expansionskammer (132) in Fluidkommunikation mit dem Innenvolumen (131) der Stange (13) steht und
c. wobei die Expansionskammer (132) mindestens in Abschnitte abgegrenzt ist mittels einer elastischen Expansionskammerwand, die es ermöglicht, ein Volumen der Expansionskammer (132) um das Volumen des Dämpfungsfluids, das in das Innenvolumen (131) der Stange (13) eindringt, zu vergrößern, wenn die Stange (13) in das hohle Gehäuse (19) geschoben wird.

8. Dämpfungseinrichtung (10) nach Anspruch 1,
**dadurch gekennzeichnet, dass**
der halbdurchlässige Bypass (133) angrenzend an das Ende der Stange (13), das innerhalb des hohlen Gehäuses (19) liegt, angeordnet ist.

9. Dämpfungseinrichtung (10) nach Anspruch 1,
**dadurch gekennzeichnet, dass**
die Stange (13) einen Fluidkanal (136), der in dem Innenvolumen (131) der Stange (13) angeordnet ist, zum Führen des Ausgleichsfluids umfasst, das durch den Bypass (133) von der oberen Kammer (191) in das innere Volumen (131) weg von dem Ende der Stange (13), das in dem hohlen Gehäuse (19) liegt, strömt.

10. Dämpfungseinrichtung (10) nach Anspruch 9,
**dadurch gekennzeichnet, dass**
die Stange (13) eine Hülse (137), die in dem Innenvolumen (131) der Stange (13) angeordnet ist, umfasst, wobei der Fluidkanal (136) mittels eines Abstands zwischen der Hülse (137) und einer Seitenwand der Stange (13) ausgebildet ist.

11. Solarmodulfeld, umfassend mehrere Solarmodule und eine Dämpfungseinrichtung (10) nach einem der Ansprüche 1 bis 10,
**dadurch gekennzeichnet, dass**
die Dämpfungseinrichtung (10) mit mindestens einem Solarmodul des Solarmodulfelds auf eine derartige Weise wirkverbunden ist, dass die Dämpfungseinrichtung (10) kinetische Energie von einer Bewegung des mindestens einen Solarmoduls absorbiert und die kinetische Energie in Wärmeenergie umwandelt.

## Revendications

1. Appareil d'amortissement (10) comprenant
a. un boîtier creux (19) contenant un fluide d'amortissement, dans lequel le boîtier (19) comprend une ouverture (21),
b. une tige (13) partiellement insérée à travers l'ouverture (21) dans le boîtier creux (19), dans lequel la tige (13) est guidée de manière coulissante le long d'un axe de course (A) par rapport au boîtier creux (19), et
c. un ensemble piston (16) fixé à une extrémité de la tige (13) résidant au sein du boîtier creux (19), dans lequel l'ensemble piston (16) sépare une chambre supérieure (191) du boîtier creux (19) située à l'extérieur de la tige et adjacente à l'ouverture (21) d'une chambre inférieure (192) du boîtier creux (19),
d. dans lequel l'ensemble piston (16) comprend un orifice (26) permettant au fluide d'amortissement de s'écouler à travers l'orifice (26) de la chambre supérieure (191) dans la chambre inférieure (192) et de la chambre inférieure (192) dans la chambre supérieure (191),
e. dans lequel la tige (13) comprend un volume interne (131) contenant un fluide de compensation,
f. dans lequel le volume interne (131) est relié à la chambre inférieure (192) de manière à acheminer le fluide d'amortissement,
**caractérisé en ce que**
g. la tige (13) comprend une dérivation semi-perméable (133) permettant au fluide de compensation de passer à travers la dérivation (133) de la chambre supérieure (191) dans le volume interne (131) de la tige (13) avec une résistance à l'écoulement sensiblement inférieure à celle du fluide d'amortissement, dans lequel la dérivation semi-perméable (133) comprend
i. une membrane semi-perméable permettant au fluide de compensation de passer à travers la membrane semi-perméable avec une résistance à l'écoulement sensiblement inférieure à celle du fluide d'amortissement,
ii. un métal fritté permettant au fluide de compensation de passer à travers les pores du métal fritté avec une résistance à l'écoulement sensiblement inférieure à celle du fluide d'amortissement ou
iii. un passage fileté entre la tige (13) et un boulon (17), un goujon (30) ou un écrou fixé à la tige (13) par un filetage, le passage fileté permettant au fluide de compensation de passer à travers le passage fileté avec une résistance à l'écoulement sensiblement inférieure à celle du fluide d'amortissement.

2. Appareil d'amortissement (10) selon la revendication 1,
**caractérisé en ce que**
la tige (13) comprend un clapet anti-retour (15) limitant un écoulement du fluide d'amortissement de la chambre inférieure (192) dans le volume interne (131) de la tige (13) et permettant un écoulement libre du fluide d'amortissement du volume interne (131) de la tige (13) dans la chambre inférieure (192).

3. Appareil d'amortissement (10) selon la revendication 2,
**caractérisé en ce que**
le clapet anti-retour (15) comprend une soupape de surpression (151) permettant un écoulement libre du fluide d'amortissement de la chambre inférieure (192) dans le volume interne (131) de la tige (13) si une pression du fluide d'amortissement dans la chambre inférieure (192) dépasse une pression seuil prédéfinie.

4. Appareil d'amortissement (10) selon la revendication 1,
**caractérisé en ce que**
a. l'appareil d'amortissement (10) comprend un boulon (17) ou un goujon (30) fixant l'ensemble piston (16) à la tige (13),
b. dans lequel le boulon (17) ou le goujon (30) comprend un trou (27) reliant le volume interne (131) à la chambre inférieure (192) de manière à acheminer le fluide d'amortissement.

5. Appareil d'amortissement (10) selon la revendication 1,
**caractérisé en ce que**
une résistance à l'écoulement du fluide d'amortissement s'écoulant à travers l'orifice (26) de l'ensemble piston (16) de la chambre inférieure (192) dans la chambre supérieure (191) est inférieure à une résistance à l'écoulement du fluide d'amortissement s'écoulant de la chambre inférieure (192) dans le volume interne (131) de la tige (13).

6. Appareil d'amortissement (10) selon la revendication 1,
**caractérisé en ce que**
a. l'appareil d'amortissement (10) comprend une chambre d'expansion (132) fixée sur une section de la tige (13) à l'extérieur du boîtier creux (19),
b. dans lequel la chambre d'expansion (132) est en communication fluidique avec le volume interne (131) de la tige (13),
c. dans lequel la chambre d'expansion (132) a un diamètre plus grand perpendiculaire à l'axe de course (A) que la tige (13).

7. Appareil d'amortissement (10) selon la revendication 1,
**caractérisé en ce que**
a. l'appareil d'amortissement (10) comprend une chambre d'expansion (132) fixée sur une section de la tige (13) à l'extérieur du boîtier creux (19),
b. dans lequel la chambre d'expansion (132) est en communication fluidique avec le volume interne (131) de la tige (13), et
c. dans lequel la chambre d'expansion (132) est délimitée au moins en sections par une paroi élastique de chambre d'expansion permettant à un volume de la chambre d'expansion (132) d'augmenter par le volume de fluide d'amortissement entrant dans le volume interne (131) de la tige (13) lorsque la tige (13) est poussée dans le boîtier creux (19).

8. Appareil d'amortissement (10) selon la revendication 1,
**caractérisé en ce que**
la dérivation semi-perméable (133) est agencée adjacente à l'extrémité de la tige (13) résidant au sein du boîtier creux (19).

9. Appareil d'amortissement (10) selon la revendication 1,
**caractérisé en ce que**
la tige (13) comprend un conduit de fluide (136) agencé dans le volume interne (131) de la tige (13) pour guider le fluide de compensation passant à travers la dérivation (133) de la chambre supérieure (191) dans le volume interne (131) loin de l'extrémité de la tige (13) résidant dans le boîtier creux (19).

10. Appareil d'amortissement (10) selon la revendication 9,
**caractérisé en ce que**
la tige (13) comprend une bague (137) agencée dans le volume interne (131) de la tige (13), le conduit de fluide (136) étant formé par un espacement entre la bague (137) et une paroi latérale de la tige (13).

11. Réseau de panneaux solaires comprenant de multiples panneaux solaires et un appareil d'amortissement (10) selon l'une des revendications 1 à 10,
**caractérisé en ce que**
l'appareil d'amortissement (10) est relié de manière fonctionnelle à au moins un panneau solaire du réseau de panneaux solaires de telle sorte que l'appareil d'amortissement (10) absorbe l'énergie cinétique provenant du mouvement de l'au moins un panneau solaire et convertit l'énergie cinétique en énergie thermique.
